# EUROPEAN PATENT APPLICATION

(11) **EP 4 835 521 A1**
(43) Date of publication of application: **04.11.2026**
(21) Application number: 24911336.6
(22) Date of filing: 26.12.2024
(51) Int. Cl.: G01T 1/36

(54) **ENERGY SPECTRUM DATA READOUT CIRCUIT, X-RAY DETECTOR, AND DATA READOUT METHOD**

(30) Priority: 28.12.2023 CN 202311830350
(71) Applicant: Nuctech Company Limited, Beijing 100084 (CN); Tsinghua University, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HAO, Jiajun, Beijing 100084 (CN); HUANG, Qingping, Beijing 100084 (CN); FENG, Bo, Beijing 100084 (CN); LI, Bo, Beijing 100084 (CN); YAN, Meiju, Beijing 100084 (CN)
(74) Representative: Isarpatent
(86) International application number: PCT/CN2024/142737
(87) International publication number: WO 2025/140415

(57) **Abstract**

The present disclosure provides an energy spectrum data readout circuit, an X-ray detector, and a data readout method. The energy spectrum data readout circuit includes an acquisition circuit and a control circuit. The acquisition circuit includes a plurality of sub-channels used to receive a current pulse signal generated based on X-rays and generate a detection signal based on the current pulse signal; a multiplexer connected to the plurality of sub-channels and used to select, according to the channel select signal, a detection signal of at least one sub-channel from the plurality of sub-channels for output; a trigger circuit connected to the plurality of sub-channels and used to generate a global trigger signal according to over-threshold flags received from the plurality of sub-channels, and output an address of an over-threshold channel according to an address readout request. The control circuit is connected to the acquisition circuit and used to, in response to a trigger signal from the acquisition circuit, generate a chip select signal and the address readout request and provide the chip select signal and the address readout request to the acquisition circuit.

## Description

This application claims priority to Chinese patent Application No. 202311830350.6, filed on December 28, 2023, the content of which are incorporated herein by reference in their entirety.

### TECHNICAL FIELD

The present disclosure relates to a field of readout circuits for detectors, and in particular, to an energy spectrum data readout circuit and a data readout method.

### BACKGROUND

At present, security inspection sites such as aviation, railway, and logistics typically employ X-ray diffraction technology to inspect luggage, packages, and the like. After X-rays irradiate an inspected object, a detector may detect and form a diffraction energy spectrum that varies with the energy distribution of the X-rays, so that molecular structure information of the material of the inspected object may be obtained according to the diffraction energy spectrum, thereby enabling identification of crystalline contraband.

In the process of acquiring the diffraction energy spectrum, the detector first interacts with the X-rays to generate current pulse signals, from which voltage amplitude information is extracted. However, an imaging module of the detector has a plurality of channels, and at the same time, only one or more channels that generate voltage amplitudes via X-rays will exist. Therefore, it is necessary to acquire the voltage amplitude as well as the positions of the channels that generate the voltage amplitudes. Existing methods require reading the voltage amplitudes of a large number of channels and performing analysis, and the next reading cycle may only be started after all the read channel information has been analyzed. This results in an excessively long duration for a single reading cycle, which imposes certain limitations in practical application scenarios.

### SUMMARY

The present disclosure provides an energy spectrum data readout circuit, an X-ray detector, and a data readout method.

According to one aspect of the present disclosure, the present disclosure provides an energy spectrum data readout circuit, including: an acquisition circuit, including: a plurality of sub-channels, each sub-channel being configured to receive a current pulse signal generated based on X-rays and generate a detection signal based on the current pulse signal; a trigger circuit, connected to the plurality of sub-channels, and configured to, in response to an over-threshold channel existing among the plurality of sub-channels, generate a global trigger signal and a channel select signal, and output an address of the over-threshold channel, where the over-threshold channel is a sub-channel with an amplitude of the generated detection signal exceeding a preset threshold; and a multiplexer, connected to the plurality of sub-channels and the trigger circuit, and configured to select, according to the channel select signal provided by the trigger circuit, the over-threshold channel from the plurality of sub-channels to output the detection signal; and a control circuit, connected to the trigger circuit and the multiplexer of the acquisition circuit, and configured to, in response to the global trigger signal from the trigger circuit, read the detection signal output by the multiplexer and the address output by the trigger circuit.

According to embodiments of the present disclosure, each sub-channel includes: a charge-sensitive amplifier, configured to receive the current pulse signal generated based on X-rays and convert the current pulse signal into a voltage signal; a signal amplitude measurement circuit, connected to the charge-sensitive amplifier, and configured to generate the detection signal based on the voltage signal, where the detection signal carries voltage amplitude information proportional to energy of the received X-rays; and an over-threshold flag generation circuit, connected to the charge-sensitive amplifier, and configured to generate an over-threshold flag according to a relationship between an amplitude of the voltage signal and the preset threshold.

According to embodiments of the present disclosure, the signal amplitude measurement circuit includes: a first shaping circuit, connected to the charge-sensitive amplifier, and configured to amplify, filter and shape the voltage signal output by the charge-sensitive amplifier; and a peak sampling and holding circuit, connected to the first shaping circuit, and configured to perform peak sampling and holding on the amplified, filtered and shaped signal output by the first shaping circuit, so as to obtain the detection signal.

According to embodiments of the present disclosure, the over-threshold flag generation circuit includes: a second shaping circuit, connected to the charge-sensitive amplifier, and configured to filter and shape the voltage signal output by the charge-sensitive amplifier, where a shaping time of the second shaping circuit is shorter than a shaping time of the first shaping circuit; and a comparator, connected to the second shaping circuit, and configured to compare a signal amplitude output by the second shaping circuit with the preset threshold, and generate the over-threshold flag according to a comparison result.

According to embodiments of the present disclosure, the trigger circuit includes: a global trigger signal generation circuit, connected to output terminals of the over-threshold flag generation circuits of the respective sub-channels, and configured to determine, according to the over-threshold flags output by the over-threshold flag generation circuits, whether the over-threshold channel exists among the plurality of sub-channels, and generate the global trigger signal in a case that the over-threshold channel exists; and an address output circuit, connected to the over-threshold flag generation circuits of the respective sub-channels, the global trigger signal generation circuit, and a control terminal of the multiplexer, and configured to select, according to the over-threshold flags of the respective sub-channels and the global trigger signal, the address of the over-threshold channel from the plurality of sub-channels for output, and output, to the control terminal of the multiplexer, the channel select signal indicating the over-threshold channel.

According to embodiments of the present disclosure, the global trigger signal generation circuit includes: an OR gate, where a plurality of input terminals of the OR gate are respectively connected to the output terminals of the over-threshold flag generation circuits of the plurality of sub-channels, and an output terminal of the OR gate is connected to the control circuit.

According to embodiments of the present disclosure, the address output circuit includes: a plurality of flip-flops, where input terminals of the plurality of flip-flops are respectively connected to the output terminals of the over-threshold flag generation circuits of the plurality of sub-channels, control terminals of the plurality of flip-flops are connected to the output terminal of the global trigger signal generation circuit, and each flip-flop is configured to output a channel trigger signal at an output terminal thereof according to signals at the input terminal and the control terminal thereof; and a priority encoder, where a plurality of input terminals of the priority encoder are respectively connected to the output terminals of the plurality of flip-flops, a first output terminal of the priority encoder is connected to the control terminal of the multiplexer, a second output terminal of the priority encoder is configured to output the address, and the priority encoder is configured to determine, according to the channel trigger signals output by the plurality of flip-flops, the over-threshold channel from the plurality of sub-channels, output, at the first output terminal, the channel select signal indicating the over-threshold channel, and output, at the second output terminal, the address of the over-threshold channel.

According to embodiments of the present disclosure, the priority encoder is further configured to, in a case that a plurality of over-threshold channels exist, select an address of one over-threshold channel from the plurality of over-threshold channels for output according to a preset priority, and output the channel select signal indicating the selected over-threshold channel.

According to embodiments of the present disclosure, the address output circuit further includes: a parallel-serial conversion circuit, where a first input terminal of the parallel-serial conversion circuit is connected to the second output terminal of the priority encoder to receive the address of the over-threshold channel, the address of the over-threshold channel is n1-bit parallel data, and an output terminal of the parallel-serial conversion circuit is connected to the control circuit.

According to embodiments of the present disclosure, the acquisition circuit further includes a configuration register, where the configuration register is connected to a second input terminal of the parallel-serial conversion circuit in the address output circuit and is configured to provide, to the second input terminal of the parallel-serial conversion circuit, an identifier of the acquisition circuit, where the identifier of the acquisition circuit is n2-bit parallel data; and the parallel-serial conversion circuit is configured to convert the (n1+n2)-bit parallel data received at the first input terminal and the second input terminal into serial data and output the serial data at the output terminal of the parallel-serial conversion circuit.

According to embodiments of the present disclosure, the energy spectrum data readout circuit includes a plurality of acquisition circuits; and the control circuit is further configured to, in response to receiving global trigger signals from at least two acquisition circuits among the plurality of acquisition circuits, select one acquisition circuit from the at least two acquisition circuits according to a preset priority, and read the voltage amplitude information and the address output by the selected acquisition circuit.

According to embodiments of the present disclosure, the acquisition circuit is implemented as an Application Specific Integrated Circuit (ASIC).

According to embodiments of the present disclosure, the control circuit is implemented as a Field Programmable Gate Array (FPGA).

According to another aspect of the present disclosure, the present disclosure provides an X-ray detector, including the energy spectrum data readout circuit according to any one of the above-mentioned embodiments.

According to another aspect of the present disclosure, the present disclosure provides a data readout method performed by the energy spectrum data readout circuit, including: receiving, by each of a plurality of sub-channels in an acquisition circuit, a current signal generated based on X-rays, and generating voltage amplitude information based on the current signal; in response to an over-threshold channel existing among the plurality of sub-channels, generating, by a trigger circuit in the acquisition circuit, a global trigger signal and a channel select signal, and outputting an address of the over-threshold channel; selecting, by a multiplexer in the acquisition circuit according to the channel select signal provided by the trigger circuit, the voltage amplitude information of the over-threshold channel from the plurality of sub-channels for output; and in response to the global trigger signal from the trigger circuit in the acquisition circuit, reading, by a control circuit, the voltage amplitude information output by the multiplexer in the acquisition circuit and the address output by the trigger circuit.

### BRIEF DESCRIPTION OF THE DRAWINGS

The above and other objectives, features and advantages of the present disclosure will be more apparent through the following description of embodiments of the present disclosure with reference to the accompanying drawings, in which:
FIG. 1A schematically shows a structural block diagram of an energy spectrum data readout circuit according to an embodiment of the present disclosure;
FIG. 1B schematically shows a structural block diagram of an acquisition circuit in an energy spectrum data readout circuit according to an embodiment of the present disclosure;
FIG. 1C schematically shows a structural block diagram of a sub-channel of an acquisition circuit in an energy spectrum data readout circuit according to an embodiment of the present disclosure;
FIG. 2 schematically shows a structural block diagram of a trigger circuit in an acquisition circuit of an energy spectrum data readout circuit according to an embodiment of the present disclosure; and
FIG. 3 schematically shows a flowchart of a data readout method performed by an energy spectrum data readout circuit according to an embodiment of the present disclosure.

### DETAILED DESCRIPTION OF EMBODIMENTS

Embodiments of the present disclosure are described below with reference to the accompanying drawings. It should be understood, however, that these descriptions are merely exemplary and are not intended to limit the scope of the present disclosure. In the following detailed descriptions, for purposes of explanation, numerous specific details are set forth in order to provide a thorough understanding of embodiments of the present disclosure. It is apparent, however, that one or more embodiments may be implemented without these specific details. In addition, in the following descriptions, descriptions of well-known structures and technologies are omitted to avoid unnecessarily obscuring the concept of the present disclosure.

Terms used herein are for the purpose of describing embodiments only and are not intended to limit the present disclosure. Terms "comprising", "including" and the like used herein specify a presence of the feature, step, operation and/or component, but do not preclude a presence or addition of one or more other features, steps, operations or components.

All terms (including technical and scientific terms) used herein have the meaning as commonly understood by those skilled in the art, unless otherwise defined. It should be noted that the terms used herein should be construed to have meanings consistent with the context of the present description and should not be construed in an idealized or overly rigid manner.

Where expressions like "at least one of A, B, and C, etc." are used, they should generally be interpreted in accordance with the meaning of the expression as commonly understood by those skilled in the art (e.g., "a system having at least one of A, B and C" should include, but not be limited to, a system having A alone, having B alone, having C alone, having A and B, having A and C, having B and C, and/or having A, B, C, etc.).

In the technical solutions of the present disclosure, the collection, storage, use, processing, transmission, provision, disclosure, application, and other processing of involved data (e.g., including but not limited to user personal information) comply with relevant laws and regulations, take necessary confidentiality measures, and do not violate public order or good customs.

Embodiments of the present disclosure provide an energy spectrum data readout circuit and a data readout method.

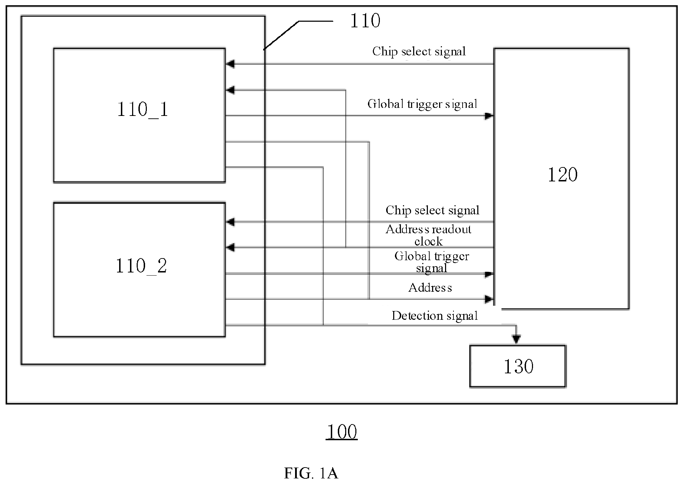

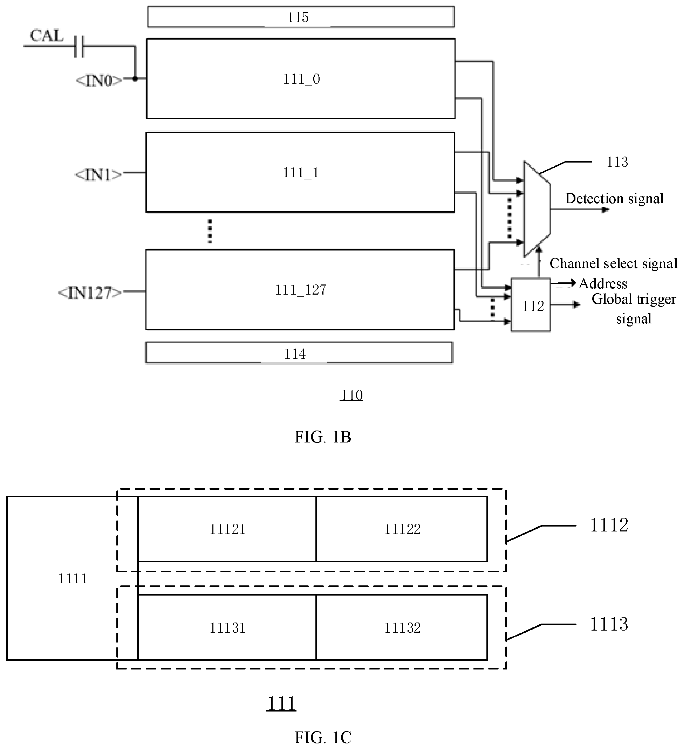

FIG. 1A schematically shows a structural block diagram of an energy spectrum data readout circuit according to an embodiment of the present disclosure. FIG. 1B schematically shows a structural block diagram of an acquisition circuit in an energy spectrum data readout circuit according to an embodiment of the present disclosure.

As shown in FIG. 1A and FIG. 1B, an energy spectrum data readout circuit 100 of the embodiment includes an acquisition circuit 110 and a control circuit 120. The acquisition circuit 110 may include a plurality of sub-channels 111_0, 111_1, ..., 111_127, a trigger circuit 112, and a multiplexer 113.

The acquisition circuit 110 includes the plurality of sub-channels 111_0, 111_1, ..., 111_127, the trigger circuit 112, and the multiplexer 113.

Each of the plurality of sub-channels 111_0, 111_1, ..., 111_127 (hereinafter collectively referred to as sub-channels 111) may receive a current pulse signal generated after X-rays are incident on a semiconductor detector, and generate, based on the current pulse signal, a detection signal for determining the type of substance, where the detection signal includes voltage amplitude information proportional to the X-ray energy. When X-rays undergo coherent scattering upon irradiation of a substance, the scattered coherent light interferes within the substance, and the angle and wavelength of the emitted diffracted light vary depending on the type of substance. By measuring the energy spectrum of the emitted light and inverting the crystal structure of the substance according to Bragg's law, the type of substance may be determined.

In some embodiments, after passing through an object under inspection, X-rays interact with pixels of a semiconductor detector (e.g., a cadmium zinc telluride detector) to generate a current signal, which is then further processed by analog front-end electronics (including a charge-sensitive amplifier, a filtering and shaping circuit, a peak sampling and holding circuit, etc.) to extract voltage amplitude information. The voltage amplitude is proportional to the energy of the X-ray photon. Based on the voltage amplitude information, a perspective image reflecting the internal structure of the inspected object may be generated.

The number of sub-channels may be set as needed. In some embodiments, the acquisition circuit may include 128 sub-channels, and an output terminal of each sub-channel is connected to the multiplexer 113.

The trigger circuit 112 is connected to the plurality of sub-channels 111_0, 111_1, ..., 111_127. The trigger circuit 112 may, in response to an over-threshold channel existing among the plurality of sub-channels, generate a global trigger signal and a channel select signal, and output an address of the over-threshold channel. The over-threshold channel may include a sub-channel with voltage amplitude information of the detection signal exceeding a preset threshold. When the voltage amplitude information exceeds the preset threshold, it indicates that the sub-channel is triggered. In some embodiments, since the present disclosure is mainly applied in low-count-rate scenarios, in most cases only one sub-channel is triggered at a time. The global trigger signal may be sent to the control circuit 120 to indicate that a sub-channel in the acquisition circuit 110 is triggered and an over-threshold channel exists. The channel select signal may be sent to the multiplexer 113 to indicate the position of the over-threshold channel within the acquisition circuit 110, so that the multiplexer may acquire the detection signal of the over-threshold channel.

The multiplexer 113 is connected to the plurality of sub-channels 111_0, 111_1, ..., 111_127 and the trigger circuit 112. The multiplexer 113 may select, according to the channel select signal provided by the trigger circuit 112, the detection signal of the over-threshold channel from the plurality of sub-channels 111_0, 111_1, ..., 111_127 for output.

The control circuit 120 is connected to the trigger circuit 112 and the multiplexer 113 of the acquisition circuit 110. The control circuit 120 may, in response to the global trigger signal from the trigger circuit, read the detection signal from the multiplexer and the address. In some embodiments of the present disclosure, the control circuit 120 may be implemented by a Field Programmable Gate Array (FPGA).

The traditional method reads the detection signals of all sub-channels or all triggered sub-channels in the acquisition circuit. This method has the problems of an excessively long reading cycle and a large amount of read data due to the large number of sub-channels read, which increases the waiting time for detection signals and limits the application scenarios of the electronics.

Embodiments of the present disclosure provide an energy spectrum data readout circuit. By providing a trigger circuit and a multiplexer, the detection signal and the address of the over-threshold channel may be selected from the plurality of sub-channels for output, greatly reducing the number of sub-channels read in a single cycle, thereby alleviating the problem of excessively long reading cycles in the traditional method and reducing the waiting time for detection signals.

In some embodiments, the acquisition circuit 110 may be implemented as an Application Specific Integrated Circuit (ASIC). The ASIC may integrate the functions of several small-scale circuits on a single chip, thereby satisfying the functions required by the acquisition circuit in the present disclosure. For example, the acquisition circuit 110 may be implemented as a cadmium zinc telluride detector readout chip, and the chip may include 128 sub-channels. Each sub-channel 111 may include a charge-sensitive amplifier, a filtering and shaping circuit, and a peak sampling and holding circuit, and an output terminal of each sub-channel is connected to the multiplexer 113. When the sub-channel does not acquire a current pulse signal, the output of the multiplexer is in a high-impedance state. When a sub-channel in the chip is triggered, the trigger circuit 112 in the acquisition circuit 110 sends a global trigger signal to the control circuit 120. In response to the global trigger signal, the control circuit sends an address readout clock to the acquisition circuit. After receiving the address readout clock, the trigger circuit in the acquisition circuit sends the address of the over-threshold channel to the control circuit, and the multiplexer receives the channel select signal sent by the trigger circuit, and acquires and outputs the detection signal of the over-threshold channel.

In some embodiments of the present disclosure, the energy spectrum data readout circuit 100 may further include an analog-to-digital conversion circuit 130. The analog-to-digital conversion circuit 130 may be used to receive the detection signal of the over-threshold channel sent by the acquisition circuit and convert the voltage amplitude information included in the detection signal from an analog signal into a digital signal. The digital signal output by the analog-to-digital conversion circuit 130 may be provided as readout data to a host computer together with the address read by the control circuit 120. The host computer may perform subsequent processing based on the readout data, for example, generating a perspective image of the inspected object based on the readout data.

In some embodiments of the present disclosure, the acquisition circuit 110 may further include a configuration register 114. The configuration register 114 is used to provide configuration information of the acquisition circuit 110, for example, providing an identifier of the acquisition circuit.

In some embodiments of the present disclosure, the acquisition circuit 110 may further include a bias circuit 115 for providing a bias current or a bias voltage to ensure the normal operation of the entire circuit.

In some embodiments of the present disclosure, the energy spectrum data readout circuit may have a read cycle. In one read cycle, in response to an over-threshold channel existing among the plurality of sub-channels, the acquisition circuit outputs the address and the detection signal of the over-threshold channel, which are read by the control circuit. When the reading by the control circuit is completed, all circuits are reset to start the next read cycle.

In embodiments of the present disclosure, only the detection signal and the address of one over-threshold channel are read in one read cycle. The read cycle is short, the data volume is small, and the read frame rate is relatively high. Compared with the traditional method of reading detection information of all channels in each read cycle, the readout efficiency of acquiring the detection signal from the plurality of channels is improved. In addition, when reading the voltage amplitude information of the plurality of channels, the traditional method adopts an operating mode of switching channel output in one cycle, which is susceptible to interference from switching signals and external loads. In contrast, in the technical solution of embodiments of the present disclosure, based on comparing the amplitude of the detection signal, when reading the amplitude information in one read cycle, the analog output waveform has already reached its peak, thereby ensuring the stability of the amplitude output of the over-threshold channel and reducing the interference of digital signals on the analog waveform.

In some embodiments, the energy spectrum data readout circuit 100 may include a plurality of acquisition circuits, for example, two acquisition circuits 110_1 and 110_2 as shown in FIG. 1A. For example, the energy spectrum data readout circuit 100 may be provided with a 256-pixel cadmium zinc telluride detector readout module, which includes two 128-subchannel cadmium zinc telluride detector readout chips serving as acquisition circuits 110_1 and 110_2, respectively. When any acquisition circuit detects an over-threshold channel, the acquisition circuit may send a global trigger signal to the control circuit. In response to the global trigger signal, the control circuit may send a chip select signal and an address readout clock to each acquisition circuit. The selected acquisition circuit outputs the address of the over-threshold channel according to the address clock and sends the detection information of the over-threshold channel to the analog-to-digital conversion circuit. For example, when the n-th sub-channel in the acquisition circuit 110_1 and the m-th sub-channel in the acquisition circuit 110_2 are triggered, the acquisition circuits 110_1 and 110_2 may each send a global trigger signal to the control circuit 120. In response to receiving the global trigger signals, the control circuit 120 may select, according to a preset priority, one acquisition circuit from the two acquisition circuits 110_1 and 110_2 as the acquisition circuit from which data is to be read. For example, assuming that the acquisition circuit 110_1 has a higher priority than the acquisition circuit 110_2, the control circuit 120 may select the acquisition circuit 110_1 as the acquisition circuit from which data is to be read. In this case, the control circuit 120 may send chip select signals to the acquisition circuits 110_1 and 110_2 to select the acquisition circuit 110_1 for reading the detection signal and the address of the over-threshold channel. The control circuit 120 also sends address readout clocks to the acquisition circuits 110_1 and 110_2, and the selected acquisition circuit 110_1 may output the address of the over-threshold channel to the control circuit 120 according to the address readout clock.

Embodiments of the present disclosure provide a multi-channel energy spectrum data readout circuit for low-count-rate scenarios. In this circuit, the output terminals of the plurality of sub-channels in the acquisition circuit are connected to the multiplexer. When there is no current pulse signal, the output of the multiplexer is in a high-impedance state. Therefore, the output ports of the plurality of chips in the acquisition circuit may be tied together, and processing of the detection signal is completed via a single analog-to-digital conversion circuit. This single-channel trigger operating mode has few readout interfaces and strong scalability, and may meet the detection requirements of low-count-rate scenarios.

FIG. 1C schematically shows a structural block diagram of a sub-channel of an acquisition circuit in an energy spectrum data readout circuit according to an embodiment of the present disclosure.

As shown in FIG. 1C, each sub-channel 111 in the acquisition circuit includes a charge-sensitive amplifier 1111, a signal amplitude measurement circuit 1112, and an over-threshold flag generation circuit 1113.

The charge-sensitive amplifier 1111 is used to receive a current pulse signal generated based on X-rays and convert the current pulse signal into a voltage signal.

The signal amplitude measurement circuit 1112 is connected to the charge-sensitive amplifier 1111 and is used to obtain, from the voltage signal, a detection signal containing voltage amplitude information.

In some embodiments of the present disclosure, the signal amplitude measurement circuit 1112 may include a first shaping circuit 11121 and a peak sampling and holding circuit 11122. The first shaping circuit 11121 is connected to the charge-sensitive amplifier 1111 and is used to filter and shape the voltage signal output by the charge-sensitive amplifier to obtain a quasi-Gaussian waveform, for example. The peak sampling and holding circuit 11122 is connected to the first shaping circuit 11121 and is used to perform peak sampling and holding on the quasi-Gaussian waveform output by the first shaping circuit to obtain a detection signal containing voltage amplitude information.

The over-threshold flag generation circuit 1113 is connected to the charge-sensitive amplifier 1111 and is used to generate an over-threshold flag according to a relationship between the amplitude of the voltage signal and a preset threshold. When the amplitude of the voltage signal is higher than the preset threshold, it indicates that the sub-channel is triggered; when the amplitude of the voltage signal is lower than or equal to the preset threshold, it indicates that the sub-channel is not triggered.

In some embodiments of the present disclosure, the over-threshold flag generation circuit 1113 may include a second shaping circuit 11131 and a comparator 11132. The second shaping circuit 11131 is connected to the charge-sensitive amplifier 1111 and is used to filter and shape the voltage signal output by the charge-sensitive amplifier. The comparator 11132 is connected to the second shaping circuit 11131 and is used to compare the signal amplitude output by the second shaping circuit with the preset threshold and generate the over-threshold flag according to the comparison result. For example, if the signal amplitude exceeds the preset threshold, the over-threshold flag is set to a high level, indicating that the sub-channel is an over-threshold channel; otherwise, the over-threshold flag is set to a low level, indicating that the sub-channel is not an over-threshold channel. In some embodiments, the shaping time of the second shaping circuit may be shorter than the shaping time of the first shaping circuit, so that the first shaping circuit may preserve more signal waveform information through slower shaping, while the second shaping circuit may quickly extract peak information from the signal through faster shaping for subsequent comparison with the threshold.

During operation, after receiving a current pulse signal, the sub-channel processes the current pulse signal with the charge-sensitive amplifier 1111 to obtain a voltage signal. The charge-sensitive amplifier 1111 sends the voltage signal to the signal amplitude measurement circuit 1112 and the over-threshold flag generation circuit 1113. The signal amplitude measurement circuit 1112 extracts the voltage amplitude from the voltage signal and converts the voltage amplitude into a detection signal containing voltage amplitude information. The over-threshold flag generation circuit 1113 generates the over-threshold flag according to whether the acquired signal amplitude exceeds the preset threshold.

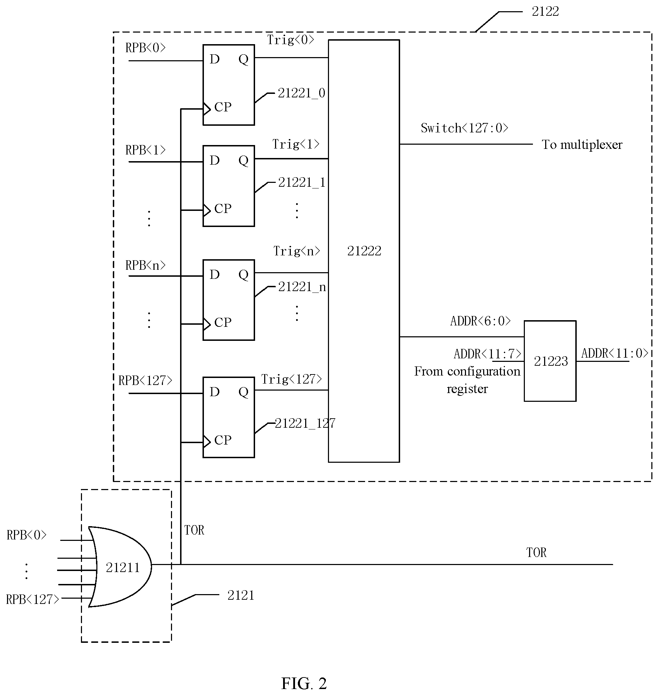

FIG. 2 schematically shows a structural block diagram of a trigger circuit in an acquisition circuit of an energy spectrum data readout circuit according to an embodiment of the present disclosure.

As shown in FIG. 2, the trigger circuit includes a global trigger signal generation circuit 2121 and an address output circuit 2122.

The global trigger signal generation circuit 2121 is connected to output terminals of the over-threshold flag generation circuits for the respective sub-channels and is used to determine, according to the over-threshold flags output by the over-threshold flag generation circuits, whether an over-threshold channel exists among the plurality of sub-channels, and if so, generate a global trigger signal.

In some embodiments of the present disclosure, the global trigger signal generation circuit 2121 may include an OR gate 21211. A plurality of input terminals of the OR gate are respectively connected to the output terminals of the over-threshold flag generation circuits of the plurality of sub-channels to receive the over-threshold flags RPB<0>, RPB<1>, ..., RPB<127> of the respective sub-channels. An output terminal of the OR gate is connected to the control circuit to provide the global trigger signal TOR thereto. The OR gate may generate the global trigger signal based on the over-threshold flags and send the global trigger signal to the control circuit.

For example, when the n-th sub-channel in the acquisition circuit is an over-threshold channel, the over-threshold flag RPB<n> received at the input terminal connected to the over-threshold flag generation circuit of the n-th sub-channel is at a high level, and the over-threshold flags received at input terminals connected to other sub-channels are at a low level. After the OR operation, the OR gate generates a high-level global trigger signal at its output terminal and sends it to the control circuit.

The address output circuit 2122 is connected to the over-threshold flag generation circuits of the respective sub-channels, the global trigger signal generation circuit, and the control terminal of the multiplexer, and is used to select, according to the over-threshold flags of the respective sub-channels and the global trigger signal, the address of the over-threshold channel from the plurality of sub-channels for output, and to output, to the control terminal of the multiplexer, a channel select signal indicating the over-threshold channel.

In some embodiments of the present disclosure, the address output circuit 2122 may include a plurality of flip-flops 21221_0, 21221_1, ..., 21221_n, ..., 21221_127 (hereinafter collectively referred to as flip-flops 21221) and a priority encoder 21222.

Input terminals D of the plurality of flip-flops 21221 are respectively connected to the output terminals of the over-threshold flag generation circuits of the plurality of sub-channels to receive the over-threshold flags RPB<0>, RPB<1>, ..., RPB<127> from the respective sub-channels. Control terminals CP of the plurality of flip-flops 21221 are connected to the output terminal of the global trigger signal generation circuit. Each flip-flop may output a channel trigger signal at its output terminal Q according to the signals at the input terminal D and the control terminal CP thereof.

For example, when the n-th sub-channel is an over-threshold channel, the global trigger signal generation circuit 2121 generates a high-level global trigger signal TOR. The over-threshold flag received at the input terminal of the flip-flop 21221_n and the global trigger signal TOR received at the control terminal of the flip-flop 21221_n are both at a high level, thus the flip-flop 21221_n generates a high-level trigger flag Trig<n> at its output terminal. Since other flip-flops receive low-level over-threshold flags at their input terminals, the trigger flags at their output terminals are at a low level. According to the trigger flags output by each flip-flop, it may be determined that the sub-channel corresponding to the flip-flop 21221_n is the over-threshold channel.

A plurality of input terminals of the priority encoder 21222 are respectively connected to the output terminals of the plurality of flip-flops 21221 to receive the trigger flags Trig<1>, Trig<2>, ..., Trig<127> output by the respective flip-flops. A first output terminal of the priority encoder 21222 is connected to the control terminal of the multiplexer to provide a channel select signal thereto, for example, a 128-bit Switch<127:0>, wherein one of the 128 bits of the channel select signal is 1 and the remaining bits are 0. Under the control of the channel select signal Switch<127:0>, the multiplexer may select one sub-channel from the plurality of sub-channels as the over-threshold channel and output the detection signal of the over-threshold channel. A second output terminal of the priority encoder 21222 is used to output an address to the control circuit, for example, a 7-bit address ADDR<6:0>. The priority encoder 21222 may determine the over-threshold channel from the plurality of sub-channels according to the channel trigger signals Trig<1>, Trig<2>, ..., Trig<127> output by the plurality of flip-flops, output at the first output terminal the channel select signal Switch<127:0> indicating the over-threshold channel, and output at the second output terminal the address ADDR<6:0> of the over-threshold channel.

In some embodiments of the present disclosure, the priority encoder may further be used to, when a plurality of over-threshold channels exist, select the address of one over-threshold channel from the plurality of over-threshold channels for output according to a preset priority, and output the channel select signal indicating the selected over-threshold channel.

Assume that the 128 sub-channels CH0 to CH127 of the acquisition circuit have a priority order of CH0>CH1>...>CH127. If both the sub-channel CH0 and the sub-channel CH1 are triggered, the trigger flags Trig<1> and Trig<2> corresponding to the sub-channel CH0 and the sub-channel CH1 are both at a high level, and the trigger flags of other sub-channels are at a low level, then the priority encoder may determine according to the preset priority that the sub-channel CH0 has a higher priority than the sub-channel CH1, thereby selecting the sub-channel CH0 with the higher priority from the sub-channels CH0 and CH1 as the over-threshold channel, outputting at the first output terminal the channel select signal Switch<127:0> for selecting the sub-channel CH0, and outputting at the second output terminal ADDR the address of the sub-channel CH0. After the control circuit completes reading the address and detection signal of the over-threshold channel CH0, the control circuit ends the current read cycle and starts the next read cycle. In the next read cycle, the control circuit may read the address and detection signal of the next priority over-threshold channel CH1, thereby achieving data readout of all over-threshold channels.

In some embodiments of the present disclosure, the address output circuit 2122 may further include a parallel-serial conversion circuit 21223. A first input terminal of the parallel-serial conversion circuit is connected to the second output terminal of the priority encoder 21222 to receive the address of the over-threshold channel. The address of the over-threshold channel is n1-bit parallel data, for example, a 6-bit address ADDR<6:0>. An output terminal of the parallel-serial conversion circuit 21223 is connected to the control circuit. The parallel-serial conversion circuit 21223 may convert the address of the over-threshold channel into serial data for provision to the control circuit.

In some embodiments, a second input terminal of the parallel-serial conversion circuit 21223 may also be connected to a configuration register to receive an identifier of the acquisition circuit, for use in selecting among the plurality of acquisition circuits when two or more of the plurality of acquisition circuits each have an over-threshold channel. The identifier of the acquisition circuit may be n2-bit parallel data, for example, a 5-bit ID number ADDR<11:7>. In this case, the parallel-serial conversion circuit 21223 may convert the (n1+n2)-bit (e.g., 7-bit address and 5-bit acquisition circuit identifier, totaling 12 bits) parallel data received at the first and second input terminals into serial data and output it at the output terminal of the parallel-serial conversion circuit 21223.

For example, when the n-th sub-channel in the acquisition circuit is an over-threshold channel, the first input terminal connected to the priority encoder acquires the 7-bit channel address ADDR<6:0> of the over-threshold channel, and the second input terminal connected to the configuration register acquires the 5-bit identifier ADDR<11:7> of the acquisition circuit. In response to receiving the global trigger signal, the control circuit sends an address readout clock to the acquisition circuit. The parallel-serial conversion circuit obtains a 12-bit serial address data ADDR<11:0> according to the address readout clock for subsequent imaging processing.

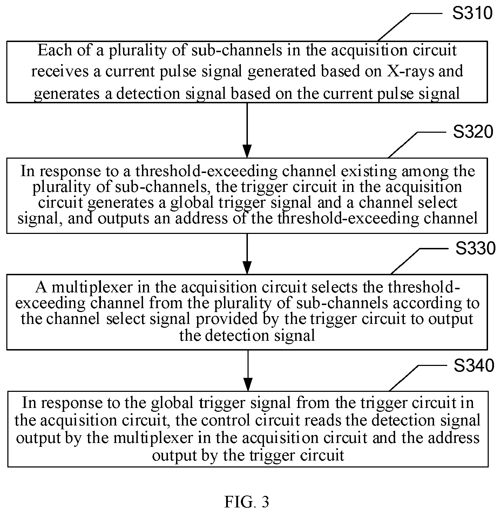

FIG. 3 schematically shows a flowchart of a data readout method performed by an energy spectrum data readout circuit according to an embodiment of the present disclosure.

In step S310, each of a plurality of sub-channels in the acquisition circuit receives a current pulse signal generated based on X-rays and generates a detection signal based on the current pulse signal.

In step S320, in response to an over-threshold channel existing among the plurality of sub-channels, the trigger circuit in the acquisition circuit generates a global trigger signal and a channel select signal, and outputs an address of the over-threshold channel.

In step S330, a multiplexer in the acquisition circuit selects the over-threshold channel from the plurality of sub-channels according to the channel select signal provided by the trigger circuit to output the detection signal.

In step S340, in response to the global trigger signal from the trigger circuit in the acquisition circuit, the control circuit reads the detection signal output by the multiplexer in the acquisition circuit and the address output by the trigger circuit.

Embodiments of the present disclosure further provide an X-ray detector including the energy spectrum data readout circuit according to any embodiment of the present disclosure. In some embodiments, the X-ray detector may be implemented as a cadmium zinc telluride detector. In some embodiments, the X-ray detector may be a cadmium zinc telluride detector for detecting X-ray photons in a low-energy region (< 200 keV) and at a low count rate (< 100 kfps).

It should also be noted that directional terms mentioned in the embodiments, such as "up", "down", "front", "back", "left", "right", etc., are only the directions referring to the accompanying drawings and are not intended to limit the scope of protection of the present disclosure. Throughout the accompanying drawings, the same elements are represented by the same or similar reference signs. Conventional structures or constructions will be omitted when they may obscure the understanding of the present disclosure.

In addition, shapes and sizes of the respective components in the figures do not reflect true sizes and proportions, but merely illustrate contents of embodiments of the present disclosure. Moreover, in the claims, any reference signs placed between parentheses should not be construed as limiting the claims.

Furthermore, the word "including" does not exclude the presence of elements or steps not listed in the claims. The word "a" or "an" preceding an element does not exclude the presence of a plurality of such elements.

The use of ordinal numbers such as "first", "second", "third", etc. in the specification and claims to modify a corresponding element do not mean that the element has any ordinal number, nor does it represent the ordering of one element relative to another element or the ordering of manufacturing methods. The use of such ordinal numbers is only used to clearly distinguish an element having a certain name and another element having the same name.

Those skilled in the art will appreciate that features recited in the various embodiments of the present disclosure and/or the claims may be combined and/or incorporated in a variety of ways, even if such combinations or incorporations are not clearly recited in the present disclosure. In particular, the features recited in the various embodiments of the present disclosure and/or the claims may be combined and/or incorporated in a variety of ways without departing from the spirit and teachings of the present disclosure, and all such combinations and/or incorporations fall within the scope of the present disclosure.

Embodiments of the present disclosure have been described above. However, these embodiments are for illustrative purposes only, and are not intended to limit the scope of the present disclosure. Although the various embodiments are described above separately, this does not mean that the measures in the various embodiments may not be advantageously used in combination. The scope of the present disclosure is defined by the appended claims and their equivalents. Without departing from the scope of the present disclosure, those skilled in the art may make various substitutions and modifications, and these substitutions and modifications should all fall within the scope of the present disclosure.

## Claims

1. An energy spectrum data readout circuit, comprising:
an acquisition circuit, comprising:
a plurality of sub-channels, each sub-channel being configured to receive a current pulse signal generated based on X-rays and generate a detection signal based on the current pulse signal;
a trigger circuit, connected to the plurality of sub-channels, and configured to, in response to an over-threshold channel existing among the plurality of sub-channels, generate a global trigger signal and a channel select signal, and output an address of the over-threshold channel, wherein the over-threshold channel is a sub-channel with an amplitude of the generated detection signal exceeding a preset threshold; and
a multiplexer, connected to the plurality of sub-channels and the trigger circuit, and configured to select, according to the channel select signal provided by the trigger circuit, the over-threshold channel from the plurality of sub-channels to output the detection signal; and
a control circuit, connected to the trigger circuit and the multiplexer of the acquisition circuit, and configured to, in response to the global trigger signal from the trigger circuit, read the detection signal output by the multiplexer and the address output by the trigger circuit.

2. The energy spectrum data readout circuit according to claim 1, wherein each sub-channel comprises:
a charge-sensitive amplifier, configured to receive the current pulse signal generated based on X-rays and convert the current pulse signal into a voltage signal;
a signal amplitude measurement circuit, connected to the charge-sensitive amplifier, and configured to generate the detection signal based on the voltage signal, wherein the detection signal carries voltage amplitude information proportional to energy of the received X-rays; and
an over-threshold flag generation circuit, connected to the charge-sensitive amplifier, and configured to generate an over-threshold flag according to a relationship between an amplitude of the voltage signal and the preset threshold.

3. The energy spectrum data readout circuit according to claim 2, wherein the signal amplitude measurement circuit comprises:
a first shaping circuit, connected to the charge-sensitive amplifier, and configured to amplify, filter and shape the voltage signal output by the charge-sensitive amplifier; and
a peak sampling and holding circuit, connected to the first shaping circuit, and configured to perform peak sampling and holding on the amplified, filtered and shaped signal output by the first shaping circuit, so as to obtain the detection signal.

4. The energy spectrum data readout circuit according to claim 2 or 3, wherein the over-threshold flag generation circuit comprises:
a second shaping circuit, connected to the charge-sensitive amplifier, and configured to filter and shape the voltage signal output by the charge-sensitive amplifier, wherein a shaping time of the second shaping circuit is shorter than a shaping time of the first shaping circuit; and
a comparator, connected to the second shaping circuit, and configured to compare a signal amplitude output by the second shaping circuit with the preset threshold, and generate the over-threshold flag according to a comparison result.

5. The energy spectrum data readout circuit according to any one of claims 2 to 4, wherein the trigger circuit comprises:
a global trigger signal generation circuit, connected to output terminals of the over-threshold flag generation circuits of the respective sub-channels, and configured to determine, according to the over-threshold flags output by the over-threshold flag generation circuits, whether the over-threshold channel exists among the plurality of sub-channels, and generate the global trigger signal in a case that the over-threshold channel exists; and
an address output circuit, connected to the over-threshold flag generation circuits of the respective sub-channels, the global trigger signal generation circuit, and a control terminal of the multiplexer, and configured to select, according to the over-threshold flags of the respective sub-channels and the global trigger signal, the address of the over-threshold channel from the plurality of sub-channels for output, and output, to the control terminal of the multiplexer, the channel select signal indicating the over-threshold channel.

6. The energy spectrum data readout circuit according to claim 5, wherein the global trigger signal generation circuit comprises: an OR gate, wherein a plurality of input terminals of the OR gate are respectively connected to the output terminals of the over-threshold flag generation circuits of the plurality of sub-channels, and an output terminal of the OR gate is connected to the control circuit.

7. The energy spectrum data readout circuit according to claim 5 or 6, wherein the address output circuit comprises:
a plurality of flip-flops, wherein input terminals of the plurality of flip-flops are respectively connected to the output terminals of the over-threshold flag generation circuits of the plurality of sub-channels, control terminals of the plurality of flip-flops are connected to the output terminal of the global trigger signal generation circuit, and each flip-flop is configured to output a channel trigger signal at an output terminal of the flip-flop according to the signals at the input terminal and the control terminal of the flip-flop; and
a priority encoder, wherein a plurality of input terminals of the priority encoder are respectively connected to the output terminals of the plurality of flip-flops, a first output terminal of the priority encoder is connected to the control terminal of the multiplexer, a second output terminal of the priority encoder is configured to output the address, and the priority encoder is configured to determine, according to the channel trigger signals output by the plurality of flip-flops, the over-threshold channel from the plurality of sub-channels, output, at the first output terminal, the channel select signal indicating the over-threshold channel, and output, at the second output terminal, the address of the over-threshold channel.

8. The energy spectrum data readout circuit according to claim 7, wherein the priority encoder is further configured to, in a case that a plurality of over-threshold channels exist, select an address of one over-threshold channel from the plurality of over-threshold channels for output according to a preset priority, and output the channel select signal indicating the selected over-threshold channel.

9. The energy spectrum data readout circuit according to claim 7 or 8, wherein the address output circuit further comprises: a parallel-serial conversion circuit, wherein a first input terminal of the parallel-serial conversion circuit is connected to the second output terminal of the priority encoder to receive the address of the over-threshold channel, the address of the over-threshold channel is n1-bit parallel data, and an output terminal of the parallel-serial conversion circuit is connected to the control circuit.

10. The energy spectrum data readout circuit according to claim 9, wherein the acquisition circuit further comprises a configuration register, wherein the configuration register is connected to a second input terminal of the parallel-serial conversion circuit in the address output circuit and is configured to provide, to the second input terminal of the parallel-serial conversion circuit, an identifier of the acquisition circuit, wherein the identifier of the acquisition circuit is n2-bit parallel data; and
the parallel-serial conversion circuit is configured to convert the (n1+n2)-bit parallel data received at the first input terminal and the second input terminal into serial data and output the serial data at the output terminal of the parallel-serial conversion circuit.

11. The energy spectrum data readout circuit according to any one of claims 1 to 10, wherein,
the energy spectrum data readout circuit comprises a plurality of acquisition circuits; and
the control circuit is further configured to, in response to receiving global trigger signals from at least two acquisition circuits among the plurality of acquisition circuits, select one acquisition circuit from the at least two acquisition circuits according to a preset priority, and read the detection signal and the address output by the selected acquisition circuit.

12. The energy spectrum data readout circuit according to any one of claims 1 to 11, wherein the acquisition circuit is implemented as an Application Specific Integrated Circuit.

13. The energy spectrum data readout circuit according to any one of claims 1 to 12, wherein the control circuit is implemented as a Field Programmable Gate Array.

14. An X-ray detector, comprising the energy spectrum data readout circuit according to any one of claims 1 to 13.

15. A data readout method performed by the energy spectrum data readout circuit according to any one of claims 1 to 13, comprising:
receiving, by each of a plurality of sub-channels in an acquisition circuit, a current pulse signal generated based on X-rays, and generating a detection signal based on the current pulse signal;
in response to an over-threshold channel existing among the plurality of sub-channels, generating, by a trigger circuit in the acquisition circuit, a global trigger signal and a channel select signal, and outputting an address of the over-threshold channel;
selecting, by a multiplexer in the acquisition circuit according to the channel select signal provided by the trigger circuit, the over-threshold channel from the plurality of sub-channels to output the detection signal; and
in response to the global trigger signal from the trigger circuit in the acquisition circuit, reading, by a control circuit, the detection signal output by the multiplexer in the acquisition circuit and the address output by the trigger circuit.
